# EUROPEAN PATENT APPLICATION

(11) **EP 2 685 089 A1**
(43) Date of publication of application: **15.01.2014**
(21) Application number: 12461530.3
(22) Date of filing: 11.07.2012
(51) Int. Cl.: F03B 17/06

(54) **Floating water power station**

(71) Applicant: Jeute, Piotr, 02-928 Warszawa (PL)
(72) Inventor: Jeute, Piotr, 02-928 Warszawa (PL)
(74) Representative: Pawlowski, Adam

(57) **Abstract**

A floating water power station, comprising rolls (110, 120) with a horizontal rotation axis, between which a driving belt (130) with blades (140) is mounted, at least partially submerged in water such that in the working run (138) the blades (140) resist water flow to a larger extent than in the return run (139). The blades (141) are shaped such that when the power station is installed in the water flow, the force exerted by the flow on the working run (138) of the belt (130) is higher when the axis of the belt (130) is set at an angle different than parallel to the water flow direction as compared to the angle parallel to the water flow.

## Description

The present invention relates to a floating water power station, in particular to a flow-through power station intended for installation in narrow and shallow water beds.

A water power station is used to transform the kinetic energy of flowing water into mechanical energy. Typical water power stations utilize the potential energy of water dammed above the power station, therefore they have to be installed in specific natural environments or use of artificial dams. Flow-through power stations utilize the kinetic energy of flowing water, therefore they can be installed in river courses or at the sea without the need for artificial damming, and therefore they do not interfere to a large extent with the nature. However, the known constructions of flow-through power stations are useful mainly at large river beds or at the sea.

For example, a US patent US 825,841 presents a stationary power station with a water wheel driven by water flow. The power station comprises two driving rolls connected by a belt with blades driven by water flow. The axes of both rolls are submerged in water. The blades on the driving belt are movable and have one configuration in a working run, where they are set parallel to the water flow, and another configuration in a return run, where they are set flat, thereby not resisting the flow.

A US patent US 855,164 presents a stationary power station comprising driving rolls connected by a belt with blades fixed still with respect to the belt. The axes of the rolls are located above the water level, but their bottom parts are submerged, such that the working part of the driving belt is fully submerged together with the blades. The return portion of the driving belt, located high above the water level, is supported by a support.

In turn, a US patent application no. US 2006/0162330 presents a generator anchored by poles to the bottom, and comprising two rolls connected by a driving belt with blades, wherein the axes of the blades are located on the water surface. The belt is stretched between the driving belts, such that its return portion, located above the water surface, runs along a line tangent to both rolls.

The stationary devices have the disadvantage that they require high investment costs and are adapted to be installed at the sea or in large rivers. Therefore, there have been designed floating water power stations, having sizes smaller than the stationary power stations. The floating power stations can be relocated and do not interfere much with the nature.

For example, a US patent US 787,562 presents a floating water engine, which comprises a floating body, on which there are mounted rolls driven by a driving chain with blades. The body keeps the rolls fully above the water surface, wherein only the working portion of the chain is submerged in water. The return portion of the chain runs above the top edge of the rolls. The body, in order to provide appropriate displacement, significantly increases the size of the working part of the power station. The chain, in its return run, being stretched above the water surface, may be subject to deformation (straining).

A US patent US 3,887,817 presents another construction of a floating water power station, comprising a single driving roll with a vertical axis. The roll is driven by a driving line with elements which deform under water flow, such that when they are set in the flow direction they resist the flow, and when they are set opposite to the flow direction, they fold and minimize the resistance. The return portion and the working portion of the driving line are located in a horizontal plane or in a slightly slanted plane, if the end of the line flows above the plane of rotation of the roll. This solution requires to be anchored to the bottom on a stiff pole in order to keep the vertical axis of the driving roll, and the free-floating line with deformable elements is prone to damage, for example by large fish or wood pieces flowing in water.

Moreover, a US patent application no. US 2008/0303284 presents a floating water power station comprising a floating body, on which there are mounted two small rolls driven by a driving belt with blades. The belt is submerged in water in its working run and therein the blades set a resistive position, wherein in the return run the blades run above the water and fold to minimize the resistance. The axes of the driving rolls are located on the water surface. Due to small sizes of the driving rolls, the return portion of the belt, which is located above the water surface, is not subject to significant deformations. However, the body increases the size of the power station beyond its working portion.

All of the aforementioned power stations are installed such that the axis of their working belt is parallel to the direction of the water flow.

It would be desirable to provide a floating water power station having small sizes and a construction which provides efficient and failure-free operation, which could furthermore be mounted and demounted in an easy manner even in narrow and shallow water beds, for example in streams, with a minimum interference with the nature and minimum hazard to water fauna.

The object of the invention is a floating water power station, comprising rolls with a horizontal rotation axis, between which a driving belt with blades is mounted, at least partially submerged in water such that in the working run the blades resist water flow to a larger extent than in the return run, wherein the blades are shaped such that when the power station is installed in the water flow, the force exerted by the flow on the working run of the belt is higher when the axis of the belt is set at an angle different than parallel to the water flow direction as compared to the angle parallel to the water flow.

Preferably, the driving belt comprises blades having a shape of an asymmetric arched fin.

Preferably, the tip of the blade is shifted with respect to the axis of symmetry of the belt.

Preferably, the blades are mounted on the driving belt by means of supports with an intersection with hydrodynamic resistance smaller than the resistance of the blade.

Preferably, the power station is anchored to the bottom or to the banks of the water channel by means of lines or chains at an angle from 10⁰ to 45⁰ with respect to the water flow direction.

Preferably, the power station comprises two pairs of coaxial rolls, wherein between the pairs of rolls there extend two driving belts.

Preferably, the blades of the front driving belt, which is exposed to the side component of the force of the water flow as the first one, have a hydrodynamic resistance smaller than the resistance of the blades of the back driving belt.

Preferably, the rolls have a total design displacement, for submersion smaller than the length of the radius (R1, R2) of each roll, equal to the total mass of the power station.

Preferably, the distance between the rolls is limited to a distance (D) at which the length of the return run of the driving belt is longer than the length of the working run and in at least half of the length of the return run the driving belt floats on water.

Preferably, to the axis of the working rolls configured to be placed upstream there is connected an electric power generator for converting the mechanical energy of the rotating working rolls to electric energy.

Preferably, the electric power generator is positioned below the axis of the working rolls and mounted thereon on a tow bar perpendicular to the axis.

Preferably, the end of the tow bar is distanced from the axis at a length higher than the length of the radius (R1) of the working rolls.

Preferably, the driving belt has a positive displacement.

Preferably, the driving belt or belts are caterpillars made of polyethylene segments.

The object of the invention is shown by means of exemplary embodiment on a drawing, in which:
Fig. 1 shows schematically the object of the invention in a top view,
Fig. 2 shows the object of the invention in a side view,
Fig. 3 shows the object of the invention in a top view,
Fig. 4 shows the object of the invention in a front view,
Fig. 5 shows the object of the invention in a slanted view,
Fig. 6 shows a working roll,
Fig. 7 shows a tow bar,
Figs. 8A, 8B and 8C show a segment of a belt with an asymmetric blade in a slanted view, top view and cross-sectional side view, respectively,
Figs. 9A, 9B and 9C show a segment of a belt with a symmetric blade in a slanted view, top view and a cross-sectional side view.

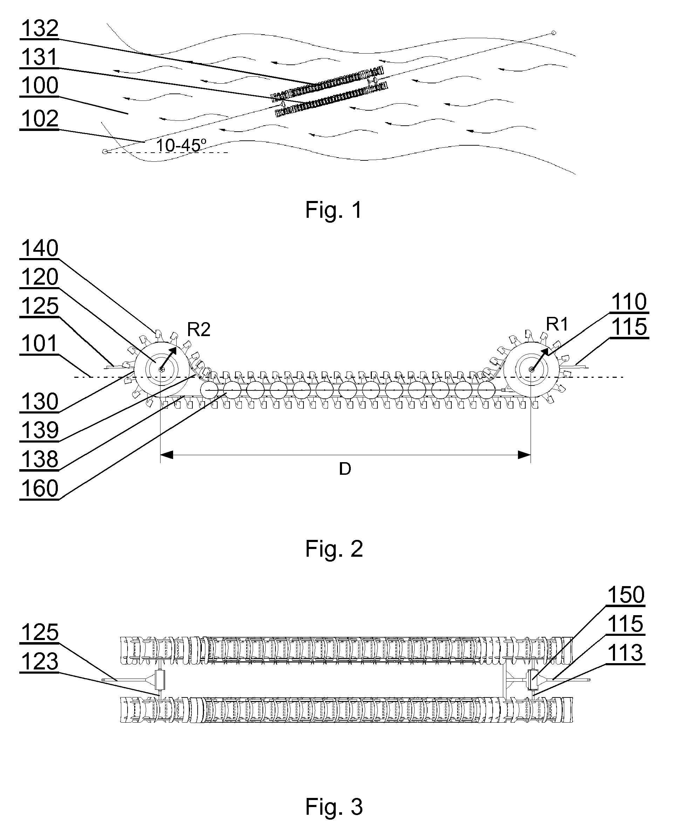

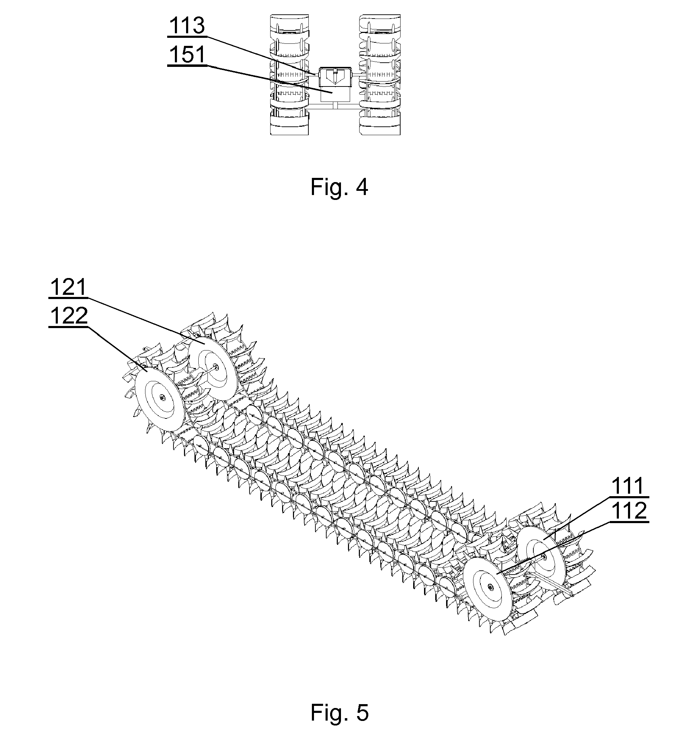

The object of the invention, as shown in Figs. 1-5, is a floating water power station, which can be installed in the runs of even small water beds 100, such as narrow rivers or streams, and anchored to the bottom or to the bank by means of lines or chains 102. The power station comprises two pairs 110, 120 of coaxial rolls 111-112, 121-122 having horizontal rotation axes 113, 114, between which there run driving belts 131, 132 with blades 140 which resist water when submerged, i.e. located below water surface 101. The driving rolls 111, 112, 121, 122 have a total design displacement, for submersion smaller than the length of the radius R1, R2 of each roll, equal to the total mass of the power station. The design displacement is understood as the sum of the own mass of the rolls and their deadweight capacity equal to the maximum allowed submersion of the water station. Therefore, at least half of the volume of both driving rolls 111, 112, 121, 122 is kept above the water surface 101, and therefore water does not resist much the rotation of the rolls. Preferably, the submersion of the power station does not exceed a quarter of the radius R1, R2 of each of the rolls.

In the presented embodiment, the rolls 111, 112, 121, 122 have the same dimensions. If the rolls 111, 112, 121, 122 have different dimensions, it is preferable for the rolls of the working roll pair 111, 112, located upstream, to have a smaller diameter than the rolls of the return roll pair 121, 122, located downstream.

The axis of rotation 113 of the working rolls 111, 112 is coupled with a generator 150, which converts the mechanical energy of the rotating rolls 111, 112 to electric energy, which can be stored in an accumulator of the power plant or transmitted to the bank, for example by means of a separate cable or via one of the anchoring lines or chains 102.

The driving belt 131, 132 in the working run 138 is located below the water surface and its blades 140 are shaped such that they resist water and therefore the flow of water runs the driving belt. In the return run 139 the driving belt 130 exits above the water surface to a height defined by the diameter of the rolls 111, 112, 121, 122 and their submersion, wherein in at least half of the length of the return run 139 the driving belt floats freely on the water surface 101. Thereby, the distance D between the driving rolls 111, 112, 121, 122 is limited. Therefore, the length of the working run 138 is smaller than the length of the return run 139 of the driving belt 130. The limitation of the distance D can be achieved by meshing the belt 130 in appropriate positions of the driving rolls 111, 112, 121, 122, or by a connector joining the axes 113, 123 of the rolls, or by weight rolls or by other means. Due to the fact that at least half of the length of the driving belt 130 in its return run 139 floats on water, the wear of the belt is reduced, as it is subject to different loads than in a situation in which it would hang in the whole length of the return run in the air above water. Positioning the belt above water would require additional resistance and cost of support or straining elements. In order for the belt to freely float on the water surface, the belt should have a positive displacement, i.e. it should be made of a material which is lighter than water or comprise air chambers for increasing the belt displacement.

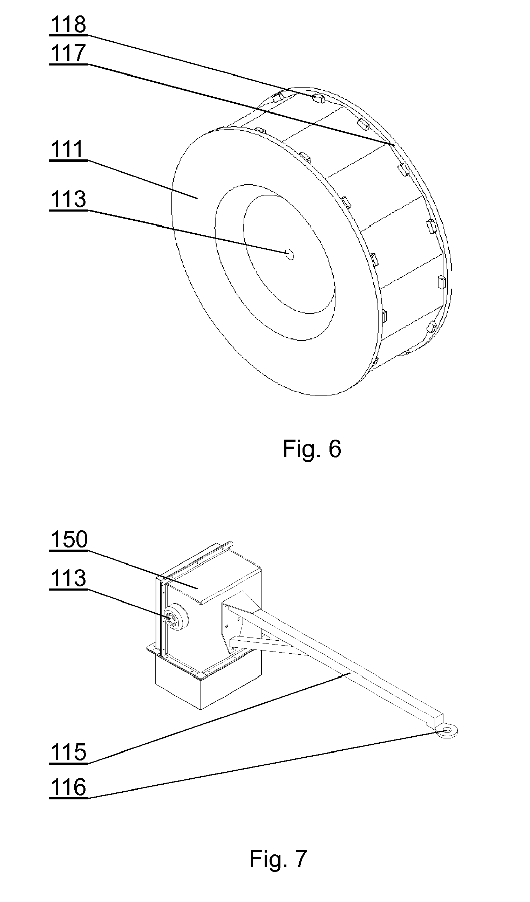

The driving belt 130 has a shape of a caterpillar comprising segments 133. The working rolls 111, 112 have teeth 118 on their outer surface, which enter corresponding openings in the caterpillar segments to transmit the moment of a caterpillar moving along with the water flow to the rotational movement of a working axis 113, coupled by means of a multiplying gear to a generator 150. In addition, the rolls 111, 112, 121, 122 have side guides, which keep the driving belts 131, 132 and limit their slip out of rolls, which is more clearly visible in Fig. 6, which shows the working roll 111.

On the shaft 113 of the working rolls 111-112 there is mounted, by bearings, a housing 151 of the generator 150 with the multiplying transmission and the mounting of the first tow bar 115, shown in details in Fig. 7. The arm of the first tow bar 115 has a length longer than the radius R1 of the working rolls 111, 112 and is terminated by an opening 116 for mounting the anchoring line or chain 112 which anchors the working part of the power station in the water flow. Due to the fact that the generator 150 with the multiplying transmission is located below the axis 113 and at a right angle to the tow bar 115, it is possible to counterbalance the torque operating via the transmission without the need for additional support constructions.

As the generator 150 is mounted together with the transmission below the axis 113 and at the right angle to the tow bar 115, its weight functions as a reaction arm which effectively compensates the resistance force resulting from the transmission of the torque of the axis 113 to the generator 150 without additional support constructions.

Similarly, on the axis 123 of the return rolls 121, 122 there is mounted, via two bearings connected by a steel triangle, a second tow bar 125, which allows anchoring the return portion of the power station in the water flow. The arm of the second tow bar 125 has a length longer than the radius R2 of the return rolls 121, 122.

The arms of the tow bars 115, 125 which extend beyond the rolls 110, 120 allow mounting the power station at an angle to the axis of the water flow, depending on the shape of the working blades 140. Preferably, the power station is configured to be mounted at an angle from 10 to 45 degrees with respect to the water flow. The deflection of the run of the driving belt from the axis of the water flow increases the exposition of each working blade of the caterpillar to the incoming water, as compared to a power station installed in parallel to the water flow.

The driving belt 130 has a form of a caterpillar and comprises segments 133 made preferably of hard polyethylene (partially foamed or empty inside) and connected together by acid-resistant steel pins. Each caterpillar segment 133 is integrated with a working blade 140 and its supports and has a positive displacement, therefore it can freely flow on water surface. The displacement of the caterpillar segment 133 is selected such that in the return run 139, wherein the blades 140 are directed upwards and located above the water surface, the majority of the volume of the caterpillar segments, preferably above 90%, is located below water surface. The caterpillar segment 133, at the side opposite to the side on which the blade 140 is mounted, is flat and has rounded edges, such that in the return run on water surface it minimizes the resistance. The blade, together with the support elements, shall have a specific gravity close to the specific gravity of water, preferably above 0,9 kg/m3. Such distribution of displacement facilitates reduction of friction resistance between the working run and the return run of the caterpillar.

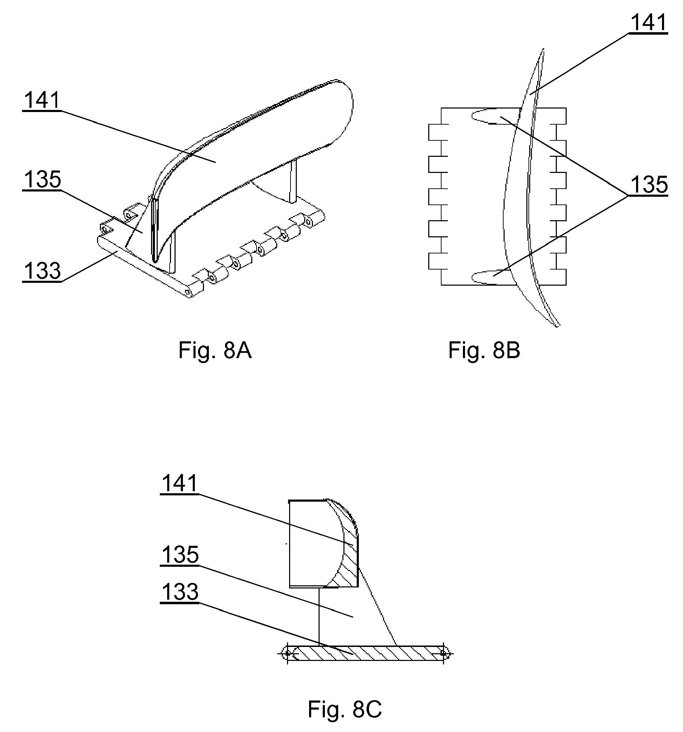

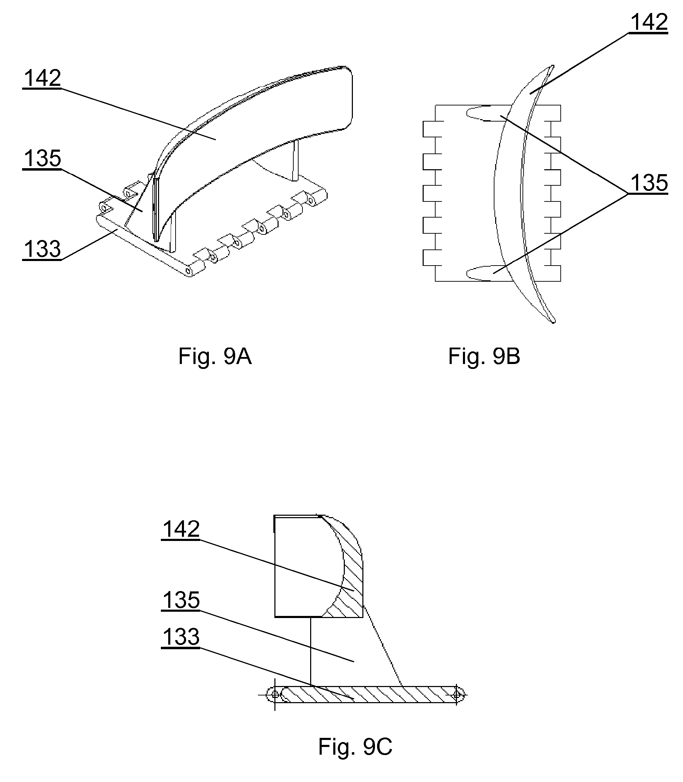

The working blades 141 of the front belt 131, exposed to the side component of the water flow force as the first one, comprise segments with blades of an asymmetrical shape, as shown in Figs. 8A-8C. The asymmetrical blade 141 has a shape of an asymmetrical arched fin, having a tip distanced from the axis of symmetry of the belt 131. The asymmetrical shape of the blades 141 facilitates positioning of the power station at an angle to the axis of the water flow and minimizes the force which pushes the power station aside. The blades 142 of the back belt 132 may be also asymmetrical blades or can be blades of a symmetrical shape, i.e. a symmetrical arched fin having a tip located at the axis of symmetry of the belt 132, as shown in Figs. 9A-9C. Preferably, the blades 141 of the front driving belt 131 cause hydrodynamic resistance smaller than the resistance of the blades 142 of the back driving belt 132, such as to direct the accelerated water streams to the blades of the back belt. The shape of the blades 141, 142 is selected such that the flowing water generates a maximum force acting according to the vector of movement of the working part of the caterpillar at minimized swelling in the water flow.

Other shapes of the blades 141 are also possible, provided the blades 141 are shaped such that after the power station is installed in the water flow, the force exerted by the flow on the working run 138 of the belt 130 is higher when the axis of the belt is set at an angle different than parallel to the water flow direction as compared to the angle parallel to the water flow. Preferably, the blades are selected for the power station to be operable at most optimal conditions when set at an angle from 10 to 45 degrees with respect to the water flow, as shown in Fig. 1. Thereby, each successive blade is only partially covered by the previous blade and more effective operation can be achieved as compared to power stations installed in parallel to the water flow direction.

The blades 141, 142 are mounted on segments 133 by means of supports 135 having an intersection with hydrodynamic resistance smaller than the resistance of the blade, such as to minimize the resistance caused by water flowing over the return portion of the caterpillar belt, for example when water undulates. The total useful torque of the turbine is generated due to the difference between the hydrodynamic resistance of the working part 138 and of the return part 139 of the belt, which allows using part of the kinetic energy of the water flow to generate torque on the shaft 113, which allows to drive the generator 150 via the multiplying transmission.

Due to the positive displacement of the working belts 131, 132, weight rolls 160 have been used to keep the working portion of the caterpillar submerged under the water surface 101. The weight rolls 160 are attached to the tow bar 115 and arranged in series, preferably of a length equal substantially to the length of the total working run of the belt, or not smaller than the length of the return run of the belt which floats on water. The weight rolls 160 may touch the return portion 139 of the working belt and keep it on the water surface. Alternatively, the weight rolls 160 may be located at a distance below the return portion 139. Therefore, the blades operate in an effective position of the flow, and the working portion and the return portion are distanced from each other.

## Claims

1. A floating water power station, comprising:
- rolls (110, 120) with a horizontal rotation axis,
- between which a driving belt (130) with blades (140) is mounted, at least partially submerged in water such that in the working run (138) the blades (140) resist water flow to a larger extent than in the return run (139),
**characterized in that**
- the blades (141) are shaped such that when the power station is installed in the water flow, the force exerted by the flow on the working run (138) of the belt (130) is higher when the axis of the belt (130) is set at an angle different than parallel to the water flow direction as compared to the angle parallel to the water flow.

2. The floating water power station according to claim 1, **characterized in that** the driving belt (130) comprises blades (141) having a shape of an asymmetric arched fin.

3. The floating water power station according to claim 2, **characterized in that** the tip of the blade (141) is shifted with respect to the axis of symmetry of the belt (131).

4. The floating water power station according to any of previous claims, **characterized in that** the blades (141) are mounted on the driving belt (130) by means of supports with an intersection with hydrodynamic resistance smaller than the resistance of the blade (141).

5. The floating water power station according to any of previous claims, **characterized in that** it is anchored to the bottom or to the banks of the water channel by means of lines or chains (102) at an angle from 10⁰ to 45⁰ with respect to the water flow direction.

6. The floating water power station according to any of previous claims, **characterized in that** it comprises two pairs (110, 120) of coaxial (113, 123) rolls (111-112; 121-122), wherein between the pairs (110, 120) of rolls there extend two driving belts (131, 132).

7. The floating water power station according to claim 6, **characterized in that** the blades (141) of the front driving belt (131), which is exposed to the side component of the force of the water flow as the first one, have a hydrodynamic resistance smaller than the resistance of the blades (142) of the back driving belt (132).

8. The floating water power station according to any of previous claims, **characterized in that** the rolls (110, 120) have a total design displacement, for submersion smaller than the length of the radius (R1, R2) of each roll, equal to the total mass of the power station.

9. The floating water power station according to any of previous claims, **characterized in that** the distance between the rolls (110-120; 111, 121 - 121, 122) is limited to a distance (D) at which the length of the return run (139) of the driving belt is longer than the length of the working run (138) and in at least half of the length of the return run (139) the driving belt (130, 131, 132) floats on water.

10. The floating water power station according to any of previous claims, **characterized in that** to the axis (113) of the working rolls (111, 112) configured to be placed upstream there is connected an electric power generator (150) for converting the mechanical energy of the rotating working rolls (110, 111, 112) to electric energy.

11. The floating water power station according to claim 10, **characterized in that** the electric power generator (150) is positioned below the axis (113) of the working rolls (111, 112) and mounted thereon on a tow bar perpendicular to the axis (113).

12. The floating water power station according to claim 11, **characterized in that** the end (116) of the tow bar is distanced from the axis (113) at a length higher than the length of the radius (R1) of the working rolls (111, 112).

13. The floating water power station according to any of previous claims, **characterized in that** the driving belt (130, 131, 132) has a positive displacement.

14. The floating water power station according to any of previous claims, **characterized in that** the driving belt or belts (130, 131, 132) are caterpillars made of polyethylene segments (133).
